# EUROPEAN PATENT APPLICATION

(11) **EP 4 679 477 A1**
(43) Date of publication of application: **14.01.2026**
(21) Application number: 24823758.8
(22) Date of filing: 14.06.2024
(51) Int. Cl.: H01H 47/02, H01H 47/00, H02J 7/00

(54) **APPARATUS AND METHOD FOR CONTROLLING RELAY**

(30) Priority: 16.06.2023 KR 20230077694
(71) Applicant: LG ENERGY SOLUTION, LTD., Seoul 07335 (KR)
(72) Inventor: CHOI, Jang-Hyeok, Daejeon 34122 (KR)
(74) Representative: Plasseraud IP
(86) International application number: PCT/KR2024/008261
(87) International publication number: WO 2024/258242

(57) **Abstract**

A relay control apparatus according to an embodiment of the present disclosure includes a processor configured to output a basic control signal for controlling an operation of a relay and a recovery signal having a differential signal level according to a recovery state thereof; a monitoring unit configured to monitor an operation state of the processor and output a decision-control signal having a differential signal level according to the operation state of the processor and a retain signal for maintaining the operation state of the relay; and a relay state determining unit configured to output one of the basic control signal and the retain signal as a relay control signal for controlling on/off of the relay based on the signal level of the decision-control signal or the recovery signal.

## Description

### TECHNICAL FIELD

The present application claims priority to Korean Patent Application No. 10-2023-0077694 filed on June 16, 2023 in the Republic of Korea, the disclosures of which are incorporated herein by reference.

The present disclosure relates to a relay control apparatus and method, and more particularly, to a relay control apparatus and method capable of retaining the operation state of a relay even when a processor is reset due to a system error or the like.

### BACKGROUND ART

As the demand for portable electronic products such as laptops, video cameras, and mobile phones that use electricity as a power source increases rapidly, and as mobile robots, electric bicycles, electric carts, and electric vehicles become more widely commercialized, research on high-performance secondary batteries that can be repeatedly charged and discharged is actively being conducted.

Commercialized secondary batteries include nickel-cadmium batteries, nickel-metal hydride batteries, nickel-zinc batteries, and lithium secondary batteries. Among them, lithium secondary batteries have the advantage of being free to charge and discharge and having a very low self-discharge rate compared to nickel-based secondary batteries, due to almost no memory effect. In addition, lithium secondary batteries have the characteristics of high energy density and high operating voltage, and thus are being studied more intensively than other types of secondary batteries and are being applied more widely in actual products.

Recently, secondary batteries are widely used not only in small devices such as portable electronic devices, but also in medium and large-sized devices such as electric vehicles and energy storage systems (ESSs).

In this case, a battery module in which a number of electrically connected secondary batteries are stored together inside a module case is mainly applied, and furthermore, when high power or large capacity is required, a battery pack in which a number of such battery modules are electrically connected is also applied.

For secondary battery cells, cell assemblies, battery modules, or battery packs (collectively referred to as "batteries"), power efficiency and safety are important factors, so research is actively being conducted on BMS, which monitors the electrical characteristics of the battery and performs feedback control such as charging and discharging using the monitoring results, as well as battery peripheral devices such as relays that control the electrical connection between the battery and the load (motor, electric heater, vehicle electrical components, etc.).

The power system, specifically the processor provided within the power system, controls the on/off of the relay that mediates between the battery and the load according to safety issues such as energy efficiency, stable operation of the battery, or suppression of overcharge/overdischarge, thereby inducing optimized power to be supplied to the load.

Electric vehicles (EVs) or hybrid electric vehicles (HEVs) equipped with the power system are basically exposed to external environments with strong vibrations and varying temperatures and humidity. In addition, in recent electric vehicles, air conditioning devices such as air conditioners and heaters, as well as numerous devices such as cameras, navigation systems, brake systems, and suspension systems, are composed of electrical and electronic components.

Therefore, since the power system that is installed in electric vehicles and is composed of electrical and electronic components is constantly exposed to such physical or electromagnetic influences, errors may occur in the processor of the power system.

When an error occurs in the processor, the processor is designed to be restored to a normal state through a reset state by operating a built-in algorithm or the like, but during this process, a problem occurs in which the processor cannot properly control the relay.

In particular, since a fatal safety accident may occur if the processor fails to properly control the relay while the vehicle is driving, there is a strong need to design the relay so that it remains in the ON state without coming into the OFF state even if a system error or the like occurs.

### DISCLOSURE

### Technical Problem

The present disclosure is designed to solve the problems of the related art, and therefore the present disclosure is directed to providing a relay control apparatus and method capable of maintaining a connection state of a relay even when a processor comes into a reset state due to a system error or the like by applying an improved configuration that may clearly operate with a relatively simple structure.

The technical problems to be solved by the present disclosure are not limited to the above, and other problems not mentioned herein will be clearly understood by those skilled in the art from the following description.

### Technical Solution

A relay control apparatus according to an aspect of the present disclosure may comprise: a processor configured to output a basic control signal for controlling an operation of a relay and a recovery signal having a differential signal level according to a recovery state thereof; a monitoring unit configured to monitor an operation state of the processor and output a decision-control signal having a differential signal level according to the operation state of the processor and a retain signal for maintaining the operation state of the relay; and a relay state determining unit configured to output one of the basic control signal and the retain signal as a relay control signal for controlling on/off of the relay based on the signal level of the decision-control signal or the recovery signal.

In addition, when the operation state of the processor is a reset state, the monitoring unit of the present disclosure may be configured to output a switching control signal, which is a decision-control signal having a different signal level from the decision-control signal output when the processor is in a normal state, to the relay state determining unit.

Furthermore, the processor of the present disclosure may be configured to output a switching recovery signal, which is a recovery signal having a different signal level from the recovery signal output in a state other than the recovery state, to the relay state determining unit when the operation state of the processor is a recovery state that switches from a reset state to a normal state.

Preferably, the processor of the present disclosure may be configured to output the recovery signal, whose signal level is transitioned, to the relay state determining unit when a first reference time has elapsed after the switching recovery signal is output.

In addition, the monitoring unit of the present disclosure may be configured to output the switching control signal only when both software monitoring using feedback information for a request and hardware monitoring using receipt of a trigger signal are failed.

Furthermore, the relay state determining unit of the present disclosure may be configured to output the basic control signal as the relay control signal when the switching recovery signal is received.

Preferably, the relay state determining unit of the present disclosure may be configured to output the basic control signal as the relay control signal when the switching control signal is not received, and to output the retain signal as the relay control signal when the switching control signal is received.

In addition, when the operation state of the processor is a reset state, the monitoring unit of the present disclosure may be configured to output the retain signal having a signal level corresponding to the basic control signal output by the processor in a normal state immediately before the reset state.

According to an embodiment, when a reset state of the processor continues for a second reference time, the monitoring unit of the present disclosure may be configured to output the retain signal in a second signal level, and to output the retain signal in a first signal level after the second reference time.

A battery pack according to another aspect of the present disclosure may comprise the relay control apparatus according to an aspect of the present disclosure.

A vehicle according to still another aspect of the present disclosure may comprise the relay control apparatus according to an aspect of the present disclosure.

A relay control method according to still another aspect of the present disclosure comprises: a basic signal receiving step of receiving a basic control signal for controlling an operation of a relay and a recovery signal having a differential signal level according to a recovery state of a processor; a control signal receiving step of receiving a decision-control signal having a differential signal level according to an operation state of the processor and a retain signal for maintaining an operation state of the relay; and a control signal output step of outputting one of the basic control signal and the retain signal as a relay control signal for controlling on/off of the relay based on the signal level of the decision-control signal or the recovery signal.

### Advantageous Effects

According to the present disclosure, the normal state and reset state of the processor may be accurately selected, and also, by organically incorporating the selected results into relay control, both the clarity and efficiency of relay control may be further optimized.

In addition, according to one aspect of the present disclosure, even if the processor is reset, the operation state of one or more relays may be effectively maintained, so that operation interruption or safety accidents caused by processor reset and subsequent relay opening may be fundamentally prevented.

Furthermore, according to one aspect of the present disclosure, by generating a retain signal to correspond to the control signal output by the processor in the normal state immediately before the reset state and configuring the relay to be controlled using this retain signal, the relay state prior to the reset state may be maintained more effectively.

In addition, according to one aspect of the present disclosure, by implementing an architecture in which the processor itself outputs a recovery signal when the operation state of the processor is recovered, it is possible to provide an advantage in which the operation state of one or more relays can be accurately controlled again by the processor.

In addition, the present disclosure may have various other effects, and they will be explained in each embodiment, or an explanation of effects that can be easily inferred by a person skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a block diagram showing a detailed configuration of a relay control apparatus according to an embodiment of the present disclosure.
FIG. 2 is a block diagram showing a detailed configuration of a relay state determining unit illustrated in FIG. 1.
FIG. 3 is a block diagram showing a detailed configuration of another embodiment of the relay state determining unit illustrated in FIG. 1.
FIG. 4 is a flowchart showing a processing process according to an embodiment of the present disclosure.
FIG. 5 is a flowchart showing a processing process according to another embodiment of the present disclosure.
FIG. 6 is a flowchart showing a processing process according to still another embodiment of the present disclosure.
FIG. 7 is a flowchart showing a processing process performed when the processor enters a recovery state.
FIG. 8 is a diagram showing a signal system according to an embodiment of the present disclosure according to each of a normal state and a reset state.
FIG. 9 is a diagram showing a signal system according to another embodiment of the present disclosure according to each of a normal state and a reset state.
FIG. 10 is a diagram showing a signal system according to still another embodiment of the present disclosure.
FIG. 11 is a diagram showing a signal system that controls multiple relays according to an embodiment of the present disclosure.
FIG. 12 is a drawing showing a signal system according to an embodiment of the present disclosure according to a recovery state of the processor.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

Throughout the specification, when a portion is referred to as "comprising" or "including" any element, it means that the portion may include other elements further, without excluding other elements, unless specifically stated otherwise.

Furthermore, the term "processor" described in the specification refers to a unit that processes at least one function or operation, and may be implemented by hardware, software, or a combination of hardware and software.

In addition, throughout the specification, when a portion is referred to as being "connected" to another portion, it is not limited to the case that they are "directly connected", but it also includes the case where they are "indirectly connected" with another element being interposed between them.

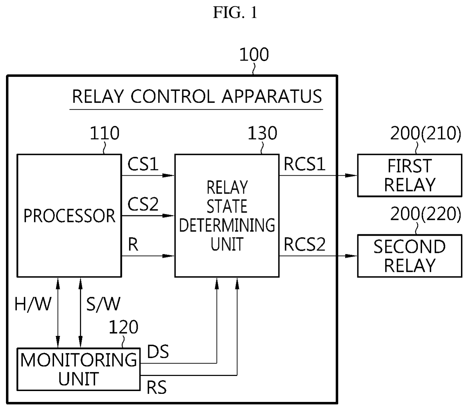

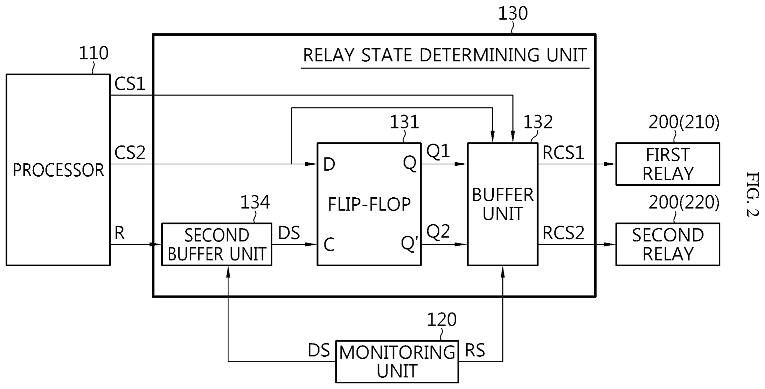

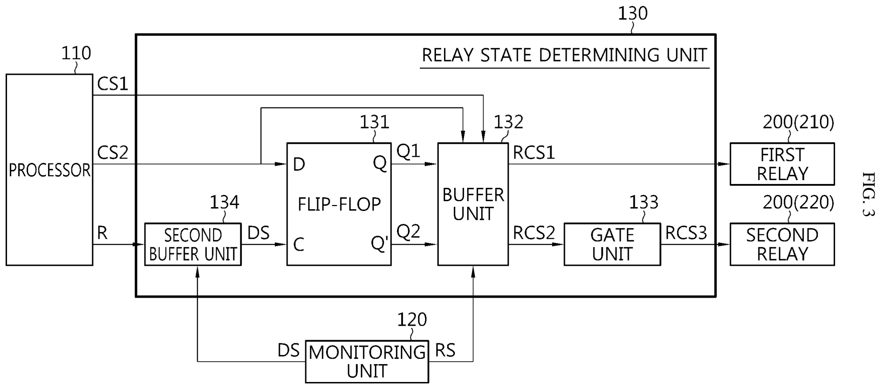

FIG. 1 is a block diagram showing a detailed configuration of a relay control apparatus 100 according to an embodiment of the present disclosure, and FIGS. 2 and 3 are a block diagram showing a detailed configuration of a relay state determining unit 130 illustrated in FIG. 1.

First, with reference to FIG. 1 and related drawings, etc., the detailed configuration of the relay control apparatus 100 according to the present disclosure and the processing performed by these configurations will be described in detail, and the relay state determining unit 130 will be described in detail later.

As illustrated in FIG. 1, the relay control apparatus 100 of the present disclosure may be configured to include a processor 110, a monitoring unit 120, and a relay state determining unit 130.

Specifically, the relay state determining unit 130 may be configured to include a flip-flop 131, a buffer unit 132, a gate unit 133 and a second buffer unit 134, as illustrated in FIGS. 2 and 3, depending on the embodiment.

The relay control apparatus 100 of the present disclosure corresponds to a device that controls the on/off of the relay 200 by organically grafting a signal originally output by the processor 110 (hereinafter referred to as a 'basic control signal') to control the operation of the signal system and the relay 200 according to the monitoring results of the processor 110 and outputting a signal that finally controls the relay 200 (hereinafter referred to as a 'relay control signal').

The drawings show a first relay 210 corresponding to a high side relay, which is a high voltage side relay, and a second relay 220 corresponding to a low side relay, which is a low voltage side relay. However, this is only an example, and it is obvious that a different number and type of relays 200 may be applied.

The processor 110 provided to the relay control apparatus 100 is a component for executing various control logics performed in the present disclosure, and may selectively include application-specific integrated circuits (ASICs), other chipsets, logic circuits, registers, communication modems, data processing devices, and the like known in the art to execute various control logic performed in the present disclosure.

Also, when the control logic is implemented in software, a set of program modules stored in a memory or the like may be implemented by the processor 110. The memory may be located inside or out of the processor 110 and may be connected to the processor 110 to allow communication by various well-known means.

Prior to the detailed description of the present disclosure, it is obvious that the relay control apparatus 100 and the relay state determining unit 130 according to the present disclosure may be implemented through various combinatorial applications of electronic components, parts, etc., such as storage means, operation processing means, and input/output means. Therefore, each component of the relay control apparatus 100 illustrated in FIG. 1 and the relay state determining unit 130 illustrated in FIG. 2, etc. should be understood as a functionally or logically distinct component rather than a physically distinct component.

That is, since each component depicted in the drawings corresponds to a logical structure for effectively explaining the technical idea by the present disclosure, even if each component is configured integrated or separately, if the function performed by the logical structure of the present disclosure can be realized, it should be interpreted as being within the scope of the present disclosure, and if it is a component that performs the same or similar function, it should of course be interpreted as being within the scope of the present disclosure regardless of the consistency in their names.

The relay control apparatus 100 according to the present disclosure is configured to control the on/off of the relay 200 by outputting a relay control signal RCS, which is a signal that finally controls the relay 200, to the relay 200 based on the basic control signal CS output by the processor 110, when the operation state of the processor 110 is a normal state.

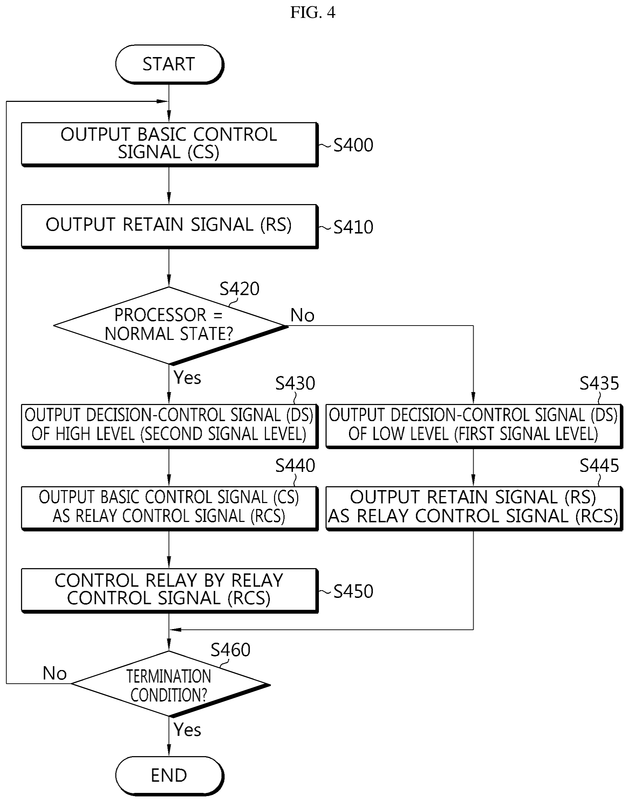

Specifically, when the first basic control signal CS1 for controlling the first relay 210 and the second basic control signal CS2 for controlling the second relay 220 are output by the processor 110 (S400, see FIG. 4), the first relay control signal RCS1 and the second relay control signal RCS2 based on these signals are output to the first relay 210 and the second relay 220, respectively (S440), thereby controlling the on/off of the first relay 210 and the second relay 220 (S450).

Since the relay 200 is controlled by the ON/OFF method rather than step control or linear control, the basic control signal CS or/and the relay control signal RCS may be configured to have a higher signal level (high level or second signal level) or a lower signal level (low level or first signal level) based on a preset reference.

Depending on the embodiment, the basic control signal CS or/and the relay control signal RCS, etc. may have a digital signal system through processing such as sampling and quantization.

In addition, since the input signal may be inverted and output using a simple circuit configuration or gate, a high level (low level) signal may be converted into a low level (high level) signal at any time.

Therefore, it should be interpreted as being self-evident at the level of ordinary technicians that even if a signal of a certain level is mapped to a certain operation, the same specific action may be controlled using a signal of the opposite level.

It goes without saying that these interpretation criteria can be equally applied to various signals used in the present disclosure including the retain signal RS output from the monitoring unit 120 of the present disclosure to maintain the operation state of the relay 200, the decision-control signal DS having a differential signal level depending on the operation state of the processor 110, the recovery signal R output by the processor 110, and the like.

The monitoring unit 120 of the present disclosure is a configuration that monitors the operation state of the processor 110 (normal state or reset state, etc.), and the monitoring unit 120 is desirably designed as a configuration independent from the processor 110 in order to fundamentally eliminate dependency on the processor 110.

The monitoring unit 120 of the present disclosure monitors the operation state of the processor 110 (S420) and outputs a decision-control signal DS having a differential signal level depending on the operation state of the processor 110 (S430, S435).

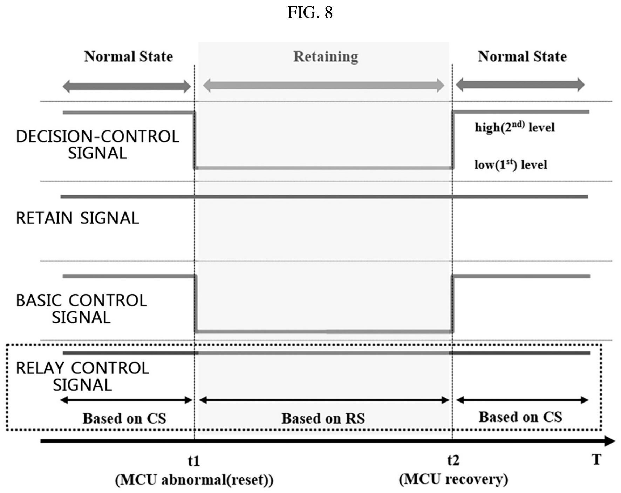

As an example, FIG. 4 and FIG. 8 illustrate an example of outputting a high level (second signal level) decision-control signal DS when the operation state of the processor 110 is a normal state, and an example of outputting a low level (first signal level) decision-control signal DS when the operation state of the processor 110 is a reset state.

In addition, the monitoring unit 120 of the present disclosure is configured to output a retain signal RS for maintaining the operation state of the relay 200 independently of the decision-control signal DS (S410). The retain signal RS may be configured to have a different signal level depending on the embodiment or the main purpose of the control.

Specifically, in the case of an embodiment in which the relay 200 is turned ON and maintained regardless of the previous (before) state of relay 200 when the processor 110 is in the reset state, the retain signal RS may be configured to continuously have a high level (second signal level) (see FIG. 8).

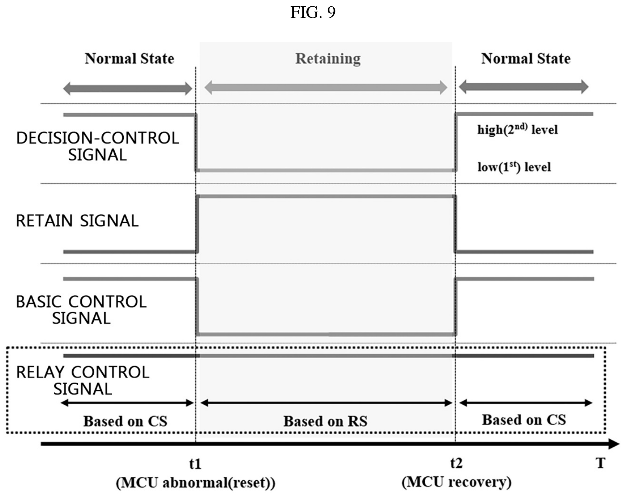

Additionally, the retain signal RS may be configured to have a low level when the processor 110 is in a normal state and a high level when the processor 110 is in a reset state, depending on the embodiment (see FIG. 9).

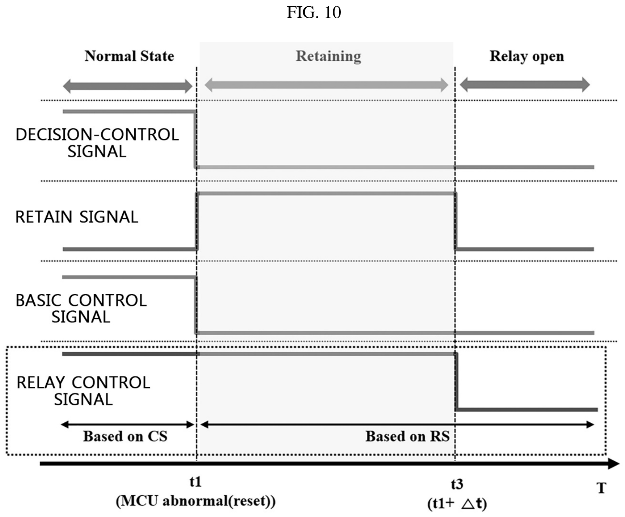

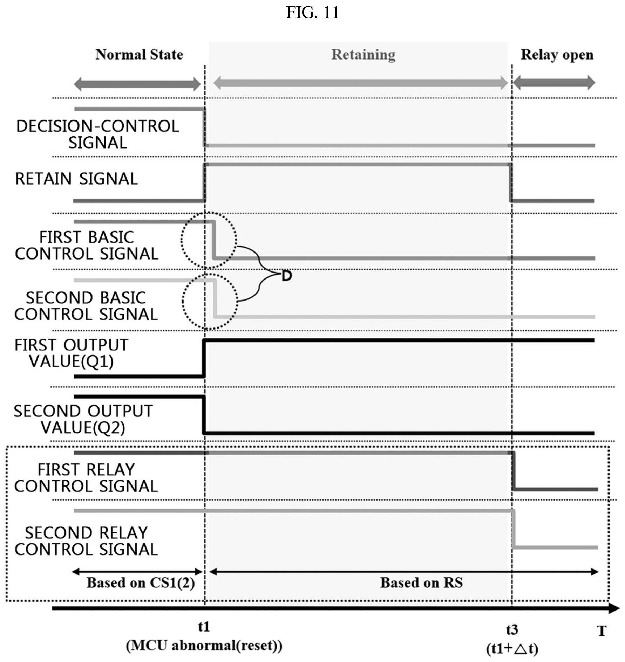

In an embodiment of the present disclosure that is intended to increase energy efficiency and suppress overcharge/discharge, etc., the signal level of the retain signal RS may be configured to be a high level (second signal level) during the second reference time (△t, see FIGS. 10 and 11), during which the reset state of the processor 110 is maintained, in order to turn off the relay 200 after the reference time (second reference time), but the signal level of the retain signal RS may be configured to be a low level (first signal level) after the second reference time (t3).

In the case of an embodiment in which the state of the relay 200 when the processor 110 is in the normal state (immediately before the reset state) is maintained even in the reset state, that is, in the case of an embodiment in which the relay 200 is to be maintained as ON when the relay 200 is ON and to be maintained as OFF when the relay 200 is OFF, the monitoring unit 120 of the present disclosure may be configured to output a retain signal RS having a signal level corresponding to the basic control signal CS output by the processor 110 when it is in the normal state immediately before the reset state.

Meanwhile, the decision-control signal DS, which is output by the monitoring unit 120 of the present disclosure and input to the relay state determining unit 130 of the present disclosure, function as signals that determine which signal is to be output by the relay state determining unit 130.

The relay state determining unit 130 of the present disclosure receives a basic control signal CS from the processor 110 and receives a decision-control signal DS and a retain signal RS from the monitoring unit 120. According to an embodiment, the relay state determining unit 130 of the present disclosure may be configured to receive a recovery signal R from the processor 110. Details thereof will be described later.

When three types of signals (basic control signal CS, retain signal RS, and decision-control signal DS) are input to the relay state determining unit 130 of the present disclosure, the relay state determining unit 130 of the present disclosure outputs one of the basic control signal CS and the retain signal RS as the relay control signal RCS depending on whether the signal level of the decision-control signal DS is high level or low level.

As described above, the decision-control signal DS has a differential signal level depending on the operation state (normal state or reset state) of the processor 110, so the decision-control signal DS represents the operation state of the processor 110 at the current time point.

That is, when the operation state of the processor 110 is a reset state, the monitoring unit 120 of the present disclosure outputs a decision-control signal DS having a signal level different from the decision-control signal DS output when the processor 110 is in a normal state.

In the following description, in order to make the relative distinction clear, the decision-control signal DS output when the operation state of the processor 110 is the reset state is referred to as a 'switching control signal'.

When the decision-control signal DS input from the monitoring unit 120 is a signal representing that the operation state of the processor 110 is a reset state (e.g., a signal of low level (first signal level)) (S435), the relay state determining unit 130 of the present disclosure outputs the retain signal RS among the basic control signal CS and the retain signal RS as the relay control signal RCS (S445).

In contrast, when the switching control signal DS is not received from the monitoring unit 120, that is, when the decision-control signal DS input from the monitoring unit 120 is a signal representing that the operation state of the processor 110 is a normal state (e.g., a signal of high level (second signal level)) (S430), the relay state determining unit 130 of the present disclosure outputs the basic control signal CS among the basic control signal CS and the retain signal RS as the relay control signal RCS (S440).

When the relay control signal RCS, which is generated by accurately reflecting the operation state of the processor 110, is output to the relay 200 in this way, the relay 200 of the present disclosure is controlled by the input relay control signal RCS (S450).

Of course, the processing of the present disclosure described above may be applied cyclically if a preset termination condition, such as a forced termination, a complete system down, or an emergency event, is not met (S460).

When the relay 200 is composed of a first relay 210 and a second relay 220, the relay state determining unit 130 of the present disclosure outputs the first relay control signal RCS1, which is determined as one of the first basic control signal CS1 and the retain signal RS according to the signal level of the decision-control signal DS, to the first relay 210, and, from a corresponding viewpoint, outputs the second relay control signal RCS2, which is determined as one of the second basic control signal CS2 and the retain signal RS according to the signal level of the decision-control signal DS, to the second relay 220.

Below, the embodiment of the present disclosure described above is complementally described with reference to FIG. 8. FIG. 8 is a drawing explaining a signal system according to an embodiment of the present disclosure according to each of a normal state and a reset state.

In FIG. 8, t1 illustrates a time point at which the reset state of the processor 110 (MCU, etc.) begins due to a system error or the like, and t2 illustrates a time point at which the processor 110 is restored to a normal state after the reset state.

As illustrated in FIG. 8, when the processor 110 is in the initial normal state (S420), the decision-control signal DS output from the monitoring unit 120 of the present disclosure (S430) is in a high level (second signal level), so the relay state determining unit 130 of the present disclosure outputs the basic control signal CS among the basic control signal CS input from the processor 110 (S400) and the retain signal RS input from the monitoring unit 120 (S410) as the relay control signal RCS based on this decision-control signal DS (S440).

Therefore, the relay control signal RCS, which finally controls the relay 200 until t1 at which the processor 110 is in the initial normal state, is based on the basic control signal CS.

When the processor 110 comes into the reset state at the time point t1 (S420), the monitoring unit 120 outputs the decision-control signal DS in the normal state and the decision-control signal DS having a differential signal level (e.g., low level (first signal level)), that is, the switching control signal DS (S435).

When the switching control signal DS, which is a decision-control signal DS having a differential level compared to the decision-control signal DS output when the processor 110 is in a normal state, is input to the relay state determining unit 130 (S435), the relay state determining unit 130 of the present disclosure outputs the retain signal RS input from the monitoring unit 120 as the relay control signal RCS (S445).

Therefore, the relay control signal RCS output from the relay state determining unit 130 in the [t1, t2] section is based on the retain signal RS.

When the processor 110 is restored to the normal state at the time point t2, the monitoring unit 120 of the present disclosure outputs the decision-control signal DS (e.g., high level) representing this, and when this signal is received, the relay state determining unit 130 of the present disclosure outputs the basic control signal CS among the basic control signal CS and the retain signal RS as the relay control signal RCS.

Therefore, after the time point t2, which is restored to the normal state, the relay control signal RCS of the present disclosure becomes based on the basic control signal CS again.

The embodiment illustrated in FIG. 8 corresponds to an embodiment in which the monitoring unit 120 of the present disclosure is set to output a retain signal RS having a high level regardless of the operation state of the processor 110.

As described above, the relay control signal RCS is selectively set to one of the basic control signal CS and the retain signal RS based on the decision-control signal DS. Therefore, even if the retain signal RS is set to maintain a high level regardless of the operation state of the processor 110, the retain signal RS is reflected as the relay control signal RCS only when the processor 110 is switched to the reset state, thereby enabling the relay 200 to be kept in the ON state.

According to the embodiment of this present disclosure, there is an advantage in that the circuit design may be implemented simply because the signal level of the retain signal RS may be maintained at a constant signal level without being linked to the operation state of the processor 110.

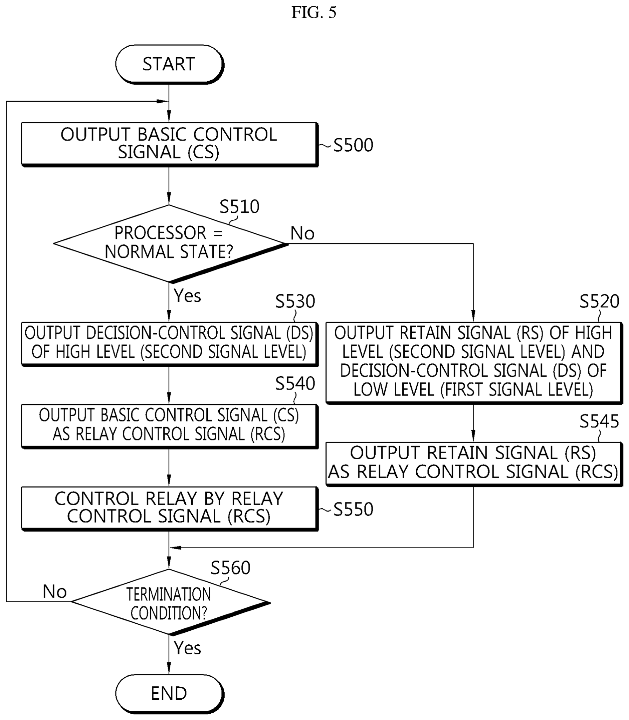

FIG. 5 is a flowchart showing a processing process according to another embodiment of the present disclosure, and FIG. 9 is a drawing explaining an example of the signal system according to this embodiment.

The embodiment of the present disclosure illustrated in FIG. 5 differs from the embodiment described above with reference to FIG. 4, etc. in that the monitoring unit 120 is configured to output a retain signal RS of high level only when the processor 110 is monitored to be in a reset state.

When the processor 110 is in a normal state (S510), as described above, the monitoring unit 120 of the present disclosure outputs a decision-control signal DS of high level (S530), and the relay state determining unit 130 of the present disclosure outputs the basic control signal CS input from the processor 110 (S500) as the relay control signal RCS (S540). The relay 200 is controlled to turn on and off by the relay control signal RCS output in this manner (S550).

On the other hand, when the processor 110 is in a reset state (S510), the monitoring unit 120 of the present disclosure outputs a retain signal RS of high level (second signal level) (S520), and independently of this, the monitoring unit 120 of the present disclosure outputs a decision-control signal DS of low level (first signal level) (S520).

When a decision-control signal DS of low level is input to the relay state determining unit 130 in this way, the relay state determining unit 130 outputs the retain signal RS among the basic control signal CS and the retain signal RS as the relay control signal RCS (S545), and the relay 200 is controlled by this relay control signal RCS (S550).

In this embodiment, as shown in the lower part of FIG. 9, in the initial normal state (~t1), the relay control signal RCS is output based on the basic control signal CS, and in the section t1 to t2, the relay control signal RCS is output based on the retain signal RS.

When the processor 110 is restored to the normal state at the time point t2, the monitoring unit 120 of the present disclosure outputs a decision-control signal DS (e.g., high level) representing this, and when this signal is received, the relay state determining unit 130 of the present disclosure outputs the basic control signal CS among the basic control signal CS and the retain signal RS as the relay control signal RCS.

Therefore, after the time point t2 when the normal state is restored, the relay control signal RCS of the present disclosure becomes based on the basic control signal CS again. As illustrated in FIG. 9, in this embodiment, when the processor 110 is restored to the normal state (t2), the retain signal RS may be switched to a low level.

Meanwhile, as described above, when the operation state of the processor 110 is the reset state, the retain signal RS of the present disclosure may be set to have a signal level corresponding to the basic control signal CS output by the processor 110 in the normal state immediately before the reset state.

According to this embodiment, if the relay 200 is open (OFF) immediately before the reset state (in the normal state), the relay 200 may be controlled to remain open even in the reset state, and if the relay 200 is closed (ON) immediately before the reset state (in the normal state), the relay 200 may be controlled to remain closed even in the reset state, so that the state of the relay 200 may be maintained identical to the normal state immediately before the reset state, thereby having the advantage of maintaining operational consistency.

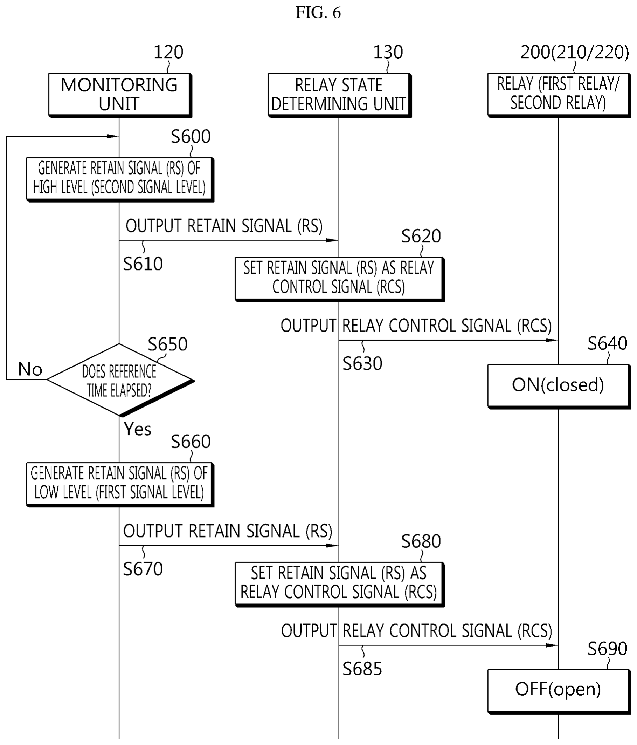

FIG. 6 is a flowchart showing a processing process according to still another embodiment of the present disclosure. FIGS. 10 and 11 are drawings complementally explaining the signal system according to the embodiment shown in FIG. 6.

The processing illustrated in FIG. 6 assumes that the processor 110 is in a reset state and the monitoring unit 120 outputs a switching control signal DS, that is, a decision-control signal DS representing that the processor 110 is in a reset state.

When a retain signal RS of high level is generated by the monitoring unit 120 (S600), this retain signal RS is output to the relay state determining unit 130 (S610). The relay state determining unit 130 outputs the relay control signal RCS, which is determined as the retain signal RS (S620) based on the switching control signal DS, to the relay 200 (S630).

Through this processing, the relay 200 of the present disclosure is controlled to the ON state (S640).

If the processor 110 is not restored to the normal state after the time point t1, the decision-control signal DS continues to maintain a low level (first signal level), so signal switching of the relay control signal RCS does not occur. That is, after the time point t1, the relay control signal RCS is output based on the retain signal RS having a high level, and thus the relay 200 is kept in the ON state.

As illustrated in FIG. 10, when the reset state lasts for the second reference time (△t) based on the time point (t1) at which the processor 110 is in the reset state (S650, S600), the monitoring unit 120 of the present disclosure outputs the retain signal RS in the second signal level (high level) during the second reference time (△t), but after the second reference time (after t3), the signal level of the retain signal RS becomes the first signal level (low level) (S660).

In this way, when the retain signal RS, which has been switched to a low level after the second reference time (△t) has elapsed based on t1, is output to the relay state determining unit 130 (S670), the relay state determining unit 130 outputs this retain signal RS as the relay control signal RCS (S680, S685).

As the relay control signal RCS based on low level is output to the relay 200 in this way, the relay 200 is controlled to OFF (S690).

According to this embodiment of the present disclosure, if the processor 110 is not restored to the normal state even after the reference time has elapsed, the relay 200 may be turned off, thereby preventing unnecessary energy waste. In addition, since the fact that the processor 110 is not restored to the normal state for a medium to long term period of time may indicate the possibility that an actual fatal error or defect has occurred, safety accidents, etc. may be prevented in advance by this embodiment of the present disclosure.

FIG. 11 is a diagram illustrating an example of a signal system generated or output when the relay 200 to be controlled is the first relay 210 and the second relay 220, and is substantially the same as the signal system illustrated in FIG. 10.

Part D indicated in FIG. 11 represents a signal delay that occurs during the process in which the processor 110 is converted from a normal state to a reset state. This part is omitted in FIGS. 8 to 10.

The first and second output signals Q1, Q2 illustrated in FIG. 11 are signal values output in conjunction with the signal switching of the decision-control signal DS described above, and correspond to signals output from the flip-flop 131 when the relay state determining unit 130 of the present disclosure is configured to include the flip-flop 131 as illustrated in FIGS. 2 and 3. A description thereof will be given later.

Meanwhile, the monitoring unit 120 of the present disclosure may be configured to output the switching control signal using the results of at least one of software monitoring that determines the current state of the processor 110 using feedback information for the request and hardware monitoring that uses whether a trigger signal is received.

As described above, the monitoring unit 120 of the present disclosure is configured to output a switching control signal DS, which is a decision-control signal DS representing a case where the operation state of the processor 110 is not a normal state, i.e., a reset state.

This switching control signal DS corresponds to an important parameter signal that determines the signal to be determined as the relay control signal RCS in the relay state determining unit 130 as described above.

Therefore, in order to more precisely monitor the operation state of the processor 110, it is desirable that the monitoring unit 120 of the present disclosure be configured to output the switching control signal DS only when both the software monitoring (S/W) that determines the current operation state of the processor 110 and the hardware monitoring (H/W) that uses the receipt of a trigger signal are failed.

Software monitoring may be applied by methods such as sending a request (question, etc.) for a certain period of time through a WDT (Window Watchdog) and checking whether corresponding feedback (answer, etc.) is received, and hardware monitoring may be applied by methods such as allocating one or more lines or channels and checking whether a specific signal is normally triggered.

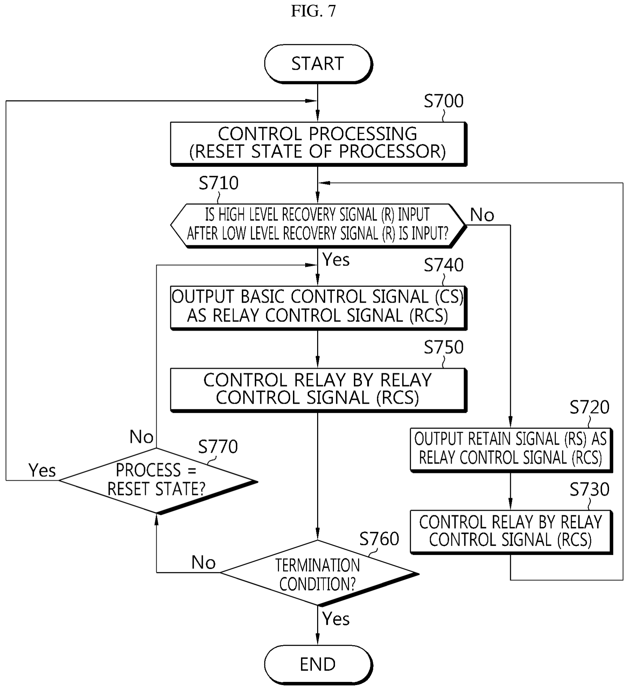

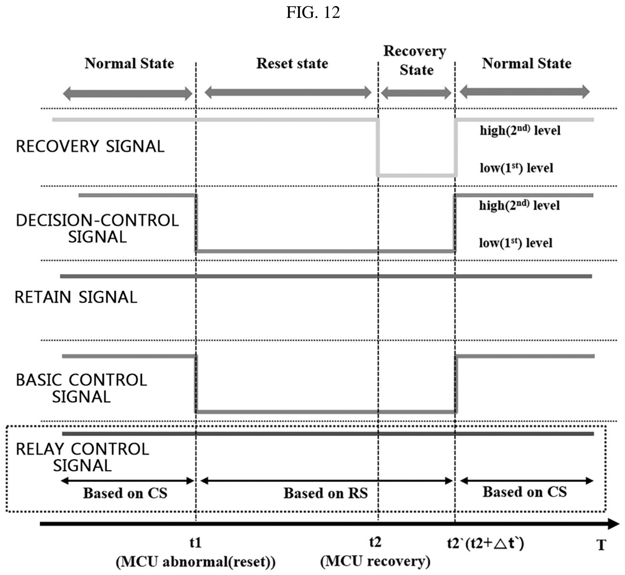

Hereinafter, an embodiment of the present disclosure in which the relay 200 is controlled by a recovery signal R output by the processor 110 will be described with reference to FIG. 7 and FIG. 12, etc.

When the processor 110 is in the reset state, the operation state of the relay 200 is controlled to be maintained by the unique processing of the present disclosure using the signal system such as the retain signal RS and decision-control signal DS as described above (S700).

The processor 110 of the present disclosure may be configured to output a recovery signal R independently of outputting a basic control signal CS for controlling the operation of the relay 200.

The recovery signal R is a signal representing that the processor 110 is in a recovery state, and refers to a signal or signal system that indicates that the processor 110 itself is in a state where it is escaping from a reset state (e.g., a reboot state) and entering a normal state (hereinafter referred to as the 'recovery state').

As illustrated in FIG. 12, when the processor 110 is in a state other than the recovery state, the recovery signal R may be configured to have a signal level of the second signal level (high level), and when the processor 110 is in the recovery state, the recovery signal R may be configured to have a signal level of the first signal level (low level).

Hereinafter, the recovery signal R output when the processor 110 is in the recovery state is referred to as a 'switching recovery signal', and the recovery signal R output when the processor 110 is in a state other than the recovery state is referred to as a 'non-switching recovery signal'.

The embodiment illustrated in FIG. 12 is an embodiment in which the first signal level (low level) is set for the switching recovery signal R, and the second signal level (high level) is set for the non-switching recovery signal R.

The processor 110 of the present disclosure may immediately output a recovery signal R (switching recovery signal R) to the relay state determining unit 130 when its operation state changes from a reset state to a recovery state.

In this case, the decision-control signal DS output by the monitoring unit 120 may be set differently depending on the embodiment. For example, when the processor 110 enters the recovery state, that is, when the switching recovery signal R is output, the signal level of the decision-control signal DS output by the monitoring unit 120 may be configured to transition from a low level to a high level.

As another example, even if a switching recovery signal R is output by the processor 110 (t2), the signal level of the decision-control signal DS may not be immediately changed, and after the first reference time (△t') has elapsed, if the signal level of the recovery signal R transitions again (from the first signal level to the second signal level) (t2' = t2 +△t'), the signal level of the decision-control signal DS may be transitioned accordingly. FIG. 12 illustrates a signal system for the latter embodiment.

That is, the processor 110 of the present disclosure may be configured to output a recovery signal whose signal level has transitioned to the relay state determining unit 130 if the first reference time (△t') has elapsed after the switching recovery signal R is output so that another related signal system may be switched or transitioned.

Based on the latter embodiment, if a low level (first signal level) recovery signal R (switching recovery signal) is input to the relay state determining unit 130 of the present disclosure and then a high level (second signal level) recovery signal R is input (S710), the relay state determining unit 130 of the present disclosure is configured to output the basic control signal CS among the basic control signal CS and the retain signal RS as the relay control signal RCS (S740).

When the relay control signal RCS is output by this method, the relay 200 of the present disclosure is controlled to turn on and off by the relay control signal RCS (S750).

After that, if the processor 110 does not enter the reset state (S770), the on/off of the relay 200 is controlled in a cyclical manner by performing steps 740 and 750 of FIG. 7, and if the processor 110 enters the reset state again (S770), control processing according to the reset state of the processor 110 is performed through the configuration and method described above (S700).

Meanwhile, if a recovery signal R of a low level (first signal level), that is, a switching recovery signal R, is not input or a recovery signal R of which a signal level has transitioned after the switching recovery signal R has been input, that is, a non-switching recovery signal R, is not input (S710), it is considered that the restoration to a complete normal state has not yet been completed, and thus the relay state determining unit 130 of the present disclosure outputs the retain signal RS among the basic control signal CS and the retain signal RS as the relay control signal RCS (S720), and the relay 200 may be configured to be controlled by the relay control signal RCS (S730).

Therefore, as shown in the lower part of FIG. 12, the relay control signal RCS that finally controls the relay 200 is generated based on the basic control signal CS in the initial normal state (~tl), generated based on the retain signal RS in the reset state and the restoration state (t1 to t2'), and finally, from the point in time when it is restored to the normal state (t2'~), generated again based on the basic control signal CS.

In a case where the recovery signal R is configured to be output by the processor 110 in this way, the relay state determining unit 130 of the present disclosure may be configured to output one of the basic control signal CS and the retain signal RS as the relay control signal RCS that controls the on/off of the relay 200 based on the signal level of the decision-control signal DS or the recovery signal R described above.

The relay control apparatus 100 according to an embodiment of the present disclosure may control the operation state of the relay 200 based on the decision-control signal DS output from the monitoring unit 120 when the processor 110 is reset one or more times.

Afterwards, when the operation state of the processor 110 is switched to the recovery state, the signal levels of the basic control signal CS, the first output signal Q1, the second output signal Q2, etc. are restored to the original signal levels based on the recovery signal R output by the processor 110, thereby allowing the operation state of the relay 200 to be controlled by the processor 110.

Hereinafter, with reference to FIGS. 2 and 3, a specific embodiment of the relay state determining unit 130, which is a component of the relay control apparatus 100 according to the present disclosure, will be described.

As illustrated in FIGS. 2 and 3, the relay state determining unit 130 of the present disclosure may be configured to include a flip-flop 131, a buffer unit 132, a gate unit 133, and a second buffer unit 134.

The flip-flop 131 is a logic circuit capable of storing and maintaining 1 bit of information. Depending on the embodiment, the flip-flop 131 illustrated in FIG. 3 may be implemented as a D flip-flop, an RS flip-flop, a JK flip-flop, or a T flip-flop.

The flip-flop 131 may have a clock terminal C to which the output signal of the second buffer unit 134 that processes the decision-control signal DS and the recovery signal R is input and a data terminal D to which the second basic control signal CS2 is input as input terminals, and may include a first output terminal Q and a second output terminal Q'.

The first output signal Q1 output from the first output terminal Q is determined by the signal levels of the second basic control signal CS2 and the decision-control signal DS or the recovery signal R, which are signals input to the flip-flop 131, and the second output signal Q2 output from the second output terminal Q' may be designed to have a signal level (first signal level vs. second signal level) opposite to that of the first output signal Q1.

As a specific example, when the decision-control signal DS is converted from a high level to a low level or the recovery signal R is converted from a low level to a high level through the internal design of the flip-flop 131, the first output signal Q1 may be configured to be converted from a low level to a high level in conjunction therewith. In this case, since the second output signal Q2 is designed to have an opposite level to the first output signal Q1, the second output signal Q2 becomes a low level signal.

The buffer unit 132 receives the first and second basic control signals CS1, CS2 from the processor 110, receives the first and second output signals Q1, Q2 from the flip-flop 131, and receives the retain signal RS from the monitoring unit 120.

The buffer unit 132 is configured to output the first and second relay control signals RCS1, RCS2, which are signals that finally control the on/off of the first and second relays 210, 220, to the first and second relays 210, 220 through a circuit architecture that implements the technical idea of the present disclosure described above.

More specifically, the buffer unit 132 may include multiple buffers. One of them, the first buffer, may be configured to receive a retain signal RS and a first output signal Q1, and determine whether to output the retain signal RS based on the signal level of the first output signal Q1.

For example, when the signal level of the first output signal Q1 is the second signal level (high level), the retain signal RS may be output through the first buffer, and when the signal level of the first output signal Q1 is the first signal level (low level), the retain signal RS may be designed not to be output.

Among the multiple buffers, the second buffer may be designed to receive the first basic control signal CS1 and the second output signal Q2, and determine whether to output the first basic control signal CS1 based on the signal level of the second output signal Q2.

For example, when the signal level of the second output signal Q2 is the second signal level (high level), the first basic control signal CS1 may be output through the second buffer, and when the signal level of the second output signal Q2 is the first signal level (low level), the first basic control signal CS1 may be designed not to be output.

In addition, the output channel (line) of the first buffer and the output channel (line) of the second buffer may be configured to be integrated with each other. In this case, since the first buffer and the second buffer receive the first output signal Q1 and the second output signal Q2, which have opposite signal levels as described above, respectively, when the retain signal RS is output from the first buffer, the first basic control signal CS1 may not be output from the second buffer.

As explained above, the fact that the retain signal RS is output from the first buffer means that the signal level of the first output signal Q1 input to the first buffer is the second signal level (high level), and the second output signal Q2 input to the second buffer is a low level signal, which is the opposite level of the first output signal Q1. Since the second output signal Q2 of low level is input to the second buffer in this way, the first basic control signal CS1 is not output from the second buffer.

Accordingly, depending on the signal levels of the first and second output signals Q1, Q2, one of the first basic control signal CS1 and the retain signal RS may be output as the first relay control signal RCS1 through the buffer unit 132. As described above, the first and second output signals Q1, Q2 are based on the signal transition of the decision-control signal DS or the recovery signal R output by the monitoring unit 120, and the decision-control signal DS and the recovery signal R are based on the operation state of the processor 110.

Therefore, the relay control apparatus 100 of the present disclosure ultimately controls the on/off of the first relay 210 through processing of 'monitoring the operation state of the processor 110, outputting the decision-control signal DS according to the monitoring result, outputting the first or/and second output signals Q1, Q2, determining one of the first basic control signal CS1 and the retain signal RS, and outputting the determined signal as the first relay control signal RCS1'.

In addition, in the case of an embodiment using the recovery signal R for the recovery state of the processor 110, the on/off of the first relay 210 is finally controlled through processing of the recovery state of the processor 110, the output of the switching recovery signal R and the signal level transition, the output of the first or/and second output signal Q1, Q2, the determination of one of the first basic control signal CS1 and the retain signal RS, and the output of the determined signal as the first relay control signal RCS1.

In this way, the relay control apparatus 100 according to the present disclosure may output the first relay control signal RCS1 controlling the first relay 210 as dual signal systems different according to the operation state by accurately reflecting the operation state of the processor 110.

The second relay control signal RCS2, which finally controls the second relay 220, may also be output in such a way that one of the second basic control signal CS2 or the retain signal RS is selected through multiple buffers (e.g., third buffer, fourth buffer, etc.) that implement the technical configuration described above. Since the contents of the third and fourth buffers correspond to the first and second buffers described above, a detailed description thereof is omitted.

The second buffer unit 134 of the present disclosure is configured to process the recovery signal R output from the processor 110 and the decision-control signal DS output from the monitoring unit 120, and may be implemented through a combinational configuration of one or more lower buffers and/or inverters (NOT gates) that implement signal delay, signal passing, signal suppression, signal inversion, etc.

This second buffer unit 134 is configured to output the decision-control signal DS or the recovery signal R to the clock terminal C of the flip-flop 131 when it is input as described above, and may perform functions such as outputting a specific signal according to the signal level of the decision-control signal DS and the recovery signal R (switching recovery signal) as illustrated in FIG. 12.

Through the configuration of the present disclosure as described above, when the operation state of the processor 110 is switched to the recovery state, the signal levels of the basic control signal CS, the first output signal Q1, the second output signal Q2, etc. are restored to the original signal levels based on the recovery signal R output by the processor 110, thereby allowing the operation state of the relay 200 to be controlled by the processor 110.

According to an embodiment, the relay state determining unit 130 of the present disclosure may further include a gate unit 133 that mediates between at least one of the first relay 210 and the second relay 220 and the buffer unit 132, as illustrated in FIG. 3. FIG. 3 illustrates an example in which the gate unit 133 is provided between the buffer unit 132 and the second relay 220 as an example thereof.

The gate unit 133 may be designed to receive the third relay control signal RCS3 from the buffer unit 132, receive the retain signal RS from the monitoring unit 120, and output the second relay control signal RCS2 to the second relay 220 based on signal levels of the third relay control signal RCS3 and the retain signal RS.

As in the previous embodiment, when the operation state of the processor 110 is a reset state, the retain signal RS may be output from the fourth buffer of the buffer unit 132, so the third relay control signal RCS3 may be the retain signal RS output from the fourth buffer.

Therefore, since the gate unit 133 receives the retain signal RS output from each of the buffer unit 132 and the monitoring unit 120, if the gate unit 133 is implemented as an AND gate, the gate unit 133 is configured to output a high level signal only when both received signals are high-level, thereby further improving the accuracy of the signal system.

The relay control apparatus 100 according to the present disclosure may be applied to a BMS (Battery Management System). That is, the BMS according to the present disclosure may include the relay control apparatus 100 described above. In this configuration, at least some of components of the relay control apparatus 100 may be implemented by supplementing or adding functions of components included in a conventional BMS. For example, the processor 110, the monitoring unit 120 and the relay state determining unit 130 of the relay control apparatus 100 may be implemented as components of the BMS.

In addition, the relay control apparatus 100 according to the present disclosure may be provided to a battery pack. That is, the battery pack according to the present disclosure may include the relay control apparatus 100 and at least one battery cell. In addition, the battery pack may further include electrical equipment (a relay, a fuse, etc.), and a case.

Furthermore, the relay control apparatus 100 according to the present disclosure may be provided to a vehicle. Accordingly, the relay control apparatus 100 may control a relay so that the relay connecting a battery and a vehicle is not opened but kept closed even when the processor 110 is reset due to a system error while the vehicle is running.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

The drawings or the like attached for explaining the present disclosure and illustrating examples thereof may be illustrated in a somewhat exaggerated form in order to emphasize or highlight the technical content of the present disclosure. However, it should be interpreted that it is obvious that various modified examples are possible at the level of a person skilled in the art by considering the previously described content and matters illustrated in the drawings.

In addition, it is self-evident that expressions such as first, second, upper, lower, or top and bottom in the explanation of the present disclosure are merely instrumental concept terms used to relatively distinguish components (elements) from each other, and are not terms used to indicate a specific order, priority, or the like, or terms used to physically distinguish each component (element) on an absolute basis.

### (Reference Signs)

100: relay control apparatus
110: processor
120: monitoring unit
130: relay state determining unit
131: flip-flop
132: buffer unit
133: gate unit
134: second buffer unit
200: relay
210: first relay
220: second relay
CS: basic control signal
CS1 (2): first (second) basic control signal
DS: decision-control signal
RS: retain signal
RCS: relay control signal
RCS1 (2): first (second) relay control signal
R: recovery signal
Q1 (2): first (second) output signal

## Claims

1. A relay control apparatus, comprising:
a processor configured to output a basic control signal for controlling an operation of a relay and a recovery signal having a differential signal level according to a recovery state thereof;
a monitoring unit configured to monitor an operation state of the processor and output a decision-control signal having a differential signal level according to the operation state of the processor and a retain signal for maintaining the operation state of the relay; and
a relay state determining unit configured to output one of the basic control signal and the retain signal as a relay control signal for controlling on/off of the relay based on the signal level of the decision-control signal or the recovery signal.

2. The relay control apparatus according to claim 1,
wherein when the operation state of the processor is a reset state, the monitoring unit is configured to output a switching control signal, which is a decision-control signal having a different signal level from the decision-control signal output when the processor is in a normal state, to the relay state determining unit.

3. The relay control apparatus according to claim 1,
wherein the processor is configured to output a switching recovery signal, which is a recovery signal having a different signal level from the recovery signal output in a state other than the recovery state, to the relay state determining unit when the operation state of the processor is a recovery state that switches from a reset state to a normal state.

4. The relay control apparatus according to claim 3,
wherein the processor is configured to output the recovery signal, whose signal level is transitioned, to the relay state determining unit when a first reference time has elapsed after the switching recovery signal is output.

5. The relay control apparatus according to claim 2,
wherein the monitoring unit is configured to output the switching control signal only when both software monitoring using feedback information for a request and hardware monitoring using receipt of a trigger signal are failed.

6. The relay control apparatus according to claim 3,
wherein the relay state determining unit is configured to output the basic control signal as the relay control signal when the switching recovery signal is received.

7. The relay control apparatus according to claim 2,
wherein the relay state determining unit is configured to output the basic control signal as the relay control signal when the switching control signal is not received, and to output the retain signal as the relay control signal when the switching control signal is received.

8. The relay control apparatus according to claim 1,
wherein when the operation state of the processor is a reset state, the monitoring unit is configured to output the retain signal having a signal level corresponding to the basic control signal output by the processor in a normal state immediately before the reset state.

9. The relay control apparatus according to claim 1,
wherein when a reset state of the processor continues for a second reference time, the monitoring unit is configured to output the retain signal in a second signal level, and to output the retain signal in a first signal level after the second reference time.

10. A battery pack, comprising the relay control apparatus according to any one of claims 1 to 9.

11. A vehicle, comprising the relay control apparatus according to any one of claims 1 to 9.

12. A relay control method, comprising:
a basic signal receiving step of receiving a basic control signal for controlling an operation of a relay and a recovery signal having a differential signal level according to a recovery state of a processor;
a control signal receiving step of receiving a decision-control signal having a differential signal level according to an operation state of the processor and a retain signal for maintaining an operation state of the relay; and
a control signal output step of outputting one of the basic control signal and the retain signal as a relay control signal for controlling on/off of the relay based on the signal level of the decision-control signal or the recovery signal.
